# FASCICULE DE BREVET EUROPEEN

(11) **EP 4 092 492 B1**
(45) Date de publication et mention de la délivrance du brevet: **23.07.2025**
(21) Numéro de dépôt: 21175370.2
(22) Date de dépôt: 21.05.2021
(51) Int. Cl.: G04C 3/00, G04C 3/08, G04C 10/00

(54) **MOUVEMENT HORLOGER COMPRENANT UNE GÉNÉRATRICE**
UHRWERK, DAS EINEN GENERATOR UMFASST
TIMEPIECE MOVEMENT COMPRISING A GENERATOR

(43) Date de publication de la demande: 23.11.2022
(73) Titulaire: ETA SA Manufacture Horlogère Suisse, 2540 Grenchen (CH)
(72) Inventeur: BESUCHET, Romain, 1400 Yverdon-les-Bains (CH); BALEON, Stéphane, 2520 La Neuveville (CH); LAGORGETTE, Pascal, 2502 Bienne (CH)
(74) Mandataire: ICB SA

(56) Documents cités:
- EP-A1- 0 511 530
- US-A- 5 581 519
- US-A- 6 012 838
- US-A1- 2010 220 559

## Description

### Domaine technique de l'invention

La présente invention concerne un mouvement d'horlogerie muni d'un affichage analogique de l'heure et comprenant au moins une partie consommant un courant électrique, ce mouvement d'horlogerie comprenant en outre une génératrice / micro-génératrice (ci-après nommée 'génératrice') susceptible de produire de l'énergie électrique pour pouvoir alimenter ladite partie consommant un courant électrique.

### Arrière-plan technologique

Le document EP 0 998 009 décrit, dans un premier mode de réalisation, un mouvement horloger muni d'une génératrice dont le rotor est couplé directement à une masse oscillante. La masse oscillante est fixée par une vis à une roue en relation d'engrenage avec le rotor de la génératrice. Par exemple, il est prévu que le rouage entre la masse oscillante et le rotor présente une multiplication par 100 de la vitesse de rotation. Aucune explication technique n'est donnée quant à l'agencement de la masse oscillante dans le mouvement horloger. Les documents US 5,822,278 et US 6,320,822 proposent un agencement similaire pour la génératrice et indiquent que l'affichage analogique est entrainé par un moteur indépendant, cet ensemble étant représenté indépendant de l'ensemble formé par la génératrice et la masse oscillante, sans divulgation particulière quant au montage de la masse oscillante dans le mouvement horloger. Le document EP 0 326 312, au nom du même titulaire, représente en coupe, à sa figure 2(a), un enseignement technique quant à l'agencement de l'ensemble 'génératrice et masse oscillante associé à un premier rouage' et de l'ensemble 'moteur électrique et affichage analogique à trois aiguilles coaxiales associé à un second rouage'. Selon cet enseignement technique, l'aiguille des secondes est pivotée inférieurement dans un pont 12. Sous ce pont est prévu un autre pont 13 dans lequel est agencé un roulement à billes. La masse oscillante est fixée par une vis à la partie centrale du roulement à billes qui peut tourner. Pour transmettre le couple de force au rotor de la génératrice, une roue centrale et solidaire de la masse oscillante est agencée entre le pont 13 et le disque de la masse oscillante, cette roue centrale engrenant avec un pignon agencé au même niveau. Cet agencement est encombrant et complexe avec un empilement de plusieurs roues, d'un palier inférieur pour la roue des secondes agencé dans un pont intermédiaire, d'un roulement à billes agencé dans un pont inférieur et en plus d'une roue centrale entre le pont inférieur et la masse oscillante pour pouvoir transmettre, via un mobile décentré, le couple de force à la génératrice.

US 6 012 838 A divulguent une montre électromécanique comprenant un dispositif d'affichage analogique pour entraîner des indicateurs de l'heure. Une génératrice comprend un rotor ainsi qu'une masse oscillante qui est coaxiale au dispositif d'affichage.

### Résumé de l'invention

La présente invention a pour objectif de proposer un mouvement électromécanique muni d'une génératrice qui soit moins encombrant, moins complexe et moins onéreux que le mouvement du même type décrit dans le document EP 0 326 312 cité précédemment. En particulier, il est prévu que le mouvement électromécanique selon l'invention nécessite peu de modifications et aucune hauteur additionnelle relativement à un mouvement électromécanique classique ayant une masse oscillante centrale et un affichage analogique de l'heure à trois aiguilles également central.

A cet effet, la présente invention définie par les revendications indépendantes 1 et 6 concerne un mouvement horloger du type électromécanique comprenant un dispositif d'affichage analogique de l'heure avec un canon portant un indicateur, ce mouvement horloger étant muni d'au moins un moteur électromécanique pour pouvoir entraîner au moins ledit indicateur, d'une génératrice comprenant un rotor et d'une masse oscillante qui est coaxiale au dispositif d'affichage de l'heure. Le mouvement horloger comprend une première roue munie d'un arbre, coaxial audit canon, ce canon étant solidaire d'une deuxième roue en relation d'engrènement avec le moteur électromécanique, ledit arbre étant guidé en rotation par le canon ou par un tube cylindrique fixe autour duquel est monté, mobile en rotation, le canon. Selon l'invention, la première roue est en relation d'engrènement avec le rotor de la génératrice, cette première roue étant reliée fixement à la masse oscillante du côté opposé à l'affichage analogique, de sorte que cette masse oscillante peut entraîner en rotation le rotor de la génératrice via la première roue.

Des formes de réalisation préférées sont définies dans les revendications dépendantes.

Grâce aux caractéristiques de l'invention, la roue centrale fixée à la masse oscillante, pour entraîner en rotation le rotor de la génératrice via un premier rouage, est formée de manière similaire à une roue des secondes avec un arbre guidé en rotation, du côté de l'affichage analogique, par un tube cylindrique fixe autour duquel est monté, mobile en rotation, le canon de la roue des minutes ou par ce canon lui-même. Cet agencement permet de diminuer l'encombrement du mouvement horloger, en particulier de diminuer sa hauteur / son épaisseur. De préférence, l'affichage analogique est prévu sans indicateur des secondes qui soit coaxial à l'indicateur des minutes. Toutefois, dans un mode de réalisation particulier qui ne sera pas décrit en détails par la suite, un indicateur des secondes coaxial à l'indicateur des minutes est prévu. Dans ce dernier cas, l'indicateur des secondes est alors monté sur un canon d'une roue des secondes à l'intérieur duquel est agencé, mobile en rotation, ledit arbre de ladite roue centrale, le canon de la roue des minutes étant alors monté autour du canon de la roue des secondes.

Selon l'invention, il est en outre proposer d'utiliser un module moteur du type électromécanique comprenant au moins un premier moteur, formé d'un rotor à aimant permanent et d'un stator muni d'au moins une bobine et associé à une première roue munie d'un arbre, et un deuxième moteur associé à au moins une deuxième roue munie d'un canon destiné à porter un indicateur des minutes d'un affichage analogique de l'heure, ledit arbre étant guidé en rotation par un tube cylindrique fixe autour duquel est monté ledit canon ou par ce canon lui-même et destiné à porter dans ledit module moteur un indicateur des secondes ou compteur de secondes, pour former un module électromécanique comprenant, d'une part, au moins un moteur électromécanique, formé dudit deuxième moteur, pour l'entraînement d'un indicateur des heures et dudit indicateur des minutes et, d'autre part, une génératrice formée par ledit rotor à aimant permanent et ledit stator muni de ladite au moins une bobine, la première roue étant destinée à être reliée fixement à une masse oscillante qui peut être agencée sous ledit module électromécanique, de manière coaxiale à cette première roue, pour pouvoir entrainer en rotation le rotor de la génératrice.

### Brève description des figures

L'invention sera décrite ci-après de manière plus détaillée à l'aide des dessins annexés, donnés à titre d'exemples nullement limitatifs, dans lesquels :
- la Figure 1 est une vue de dessous, en perspective et partiellement éclatée, d'un mode de réalisation d'un mouvement horloger électromécanique selon l'invention.

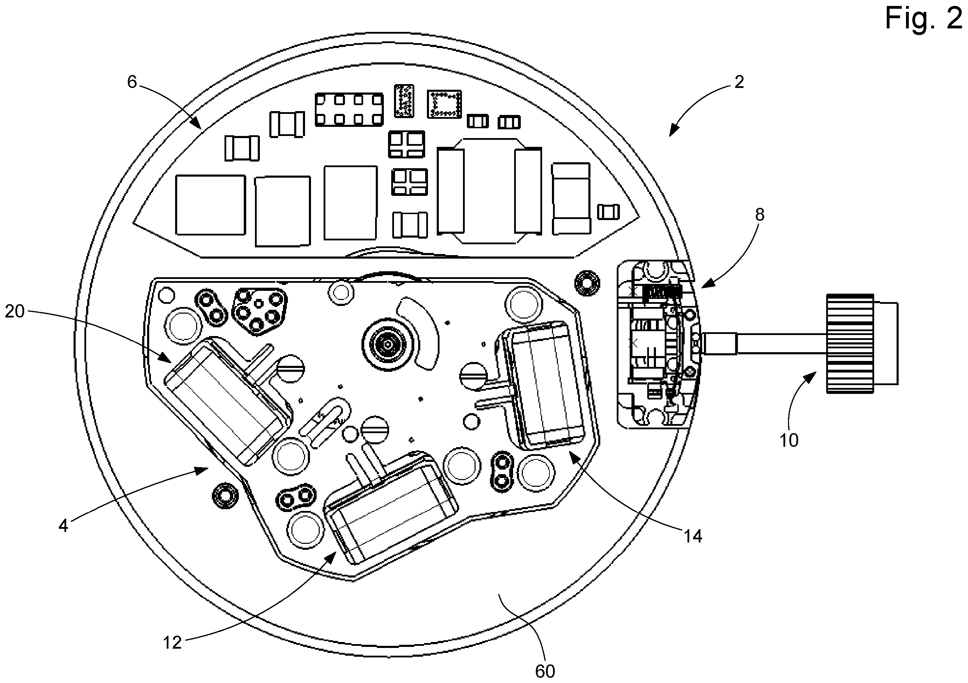

- la Figure 2 est une vue de dessus du mouvement horloger de la Figure 1.
- les Figures 3A et 3B sont respectivement deux parties d'une coupe transversale du mouvement horloger des Figures 1 et 2 selon une ligne brisée permettant de montrer divers éléments du module électromécanique de ce mouvement horloger.
- les Figures 4A et 4B sont des vues en perspective d'un module électromécanique formant le mouvement horloger des figures précédentes.

### Description détaillée de l'invention

En référence aux figures annexées, on décrira ci-après un mode de réalisation selon l'invention.

Le mouvement horloger 2 du type électromécanique comprend un module électromécanique 4, un module électronique 6 pour effectuer diverses fonctions et commander le module électromécanique, un module de commande 8 associé à une tige-couronne 10 pour effectuer notamment une mise à l'heure d'un affichage analogique 16 dont l'aiguille des minutes 18 et l'aiguille des heures 17, coaxiales et présentant un axe de rotation central 56, sont respectivement entraînées en rotation, via deux rouages indépendants, par deux moteurs électromécaniques 12 et 14 du module électromécanique 4. Les aiguilles 17 et 18 sont montées respectivement sur deux canons allongés 25 et 26 qui sont alignés sur l'axe de rotation 56, le canon 26 étant situé à l'intérieur du canon 25 qui est guidé en rotation par ce canon 26. Le canon 26 est guidé en rotation par un tube cylindrique 30 qui est agencé à l'intérieur de ce canon 26 et fixé, à une extrémité, à un pont 32 du module électromécanique 4, lequel comprend en outre une platine 50 sur laquelle sont montés les divers éléments de ce module. Au-dessus de la platine est prévu un cadran 52 dans lequel peut être agencé au moins un affichage digital, ce cadran étant alors relié électriquement au module électronique 6.

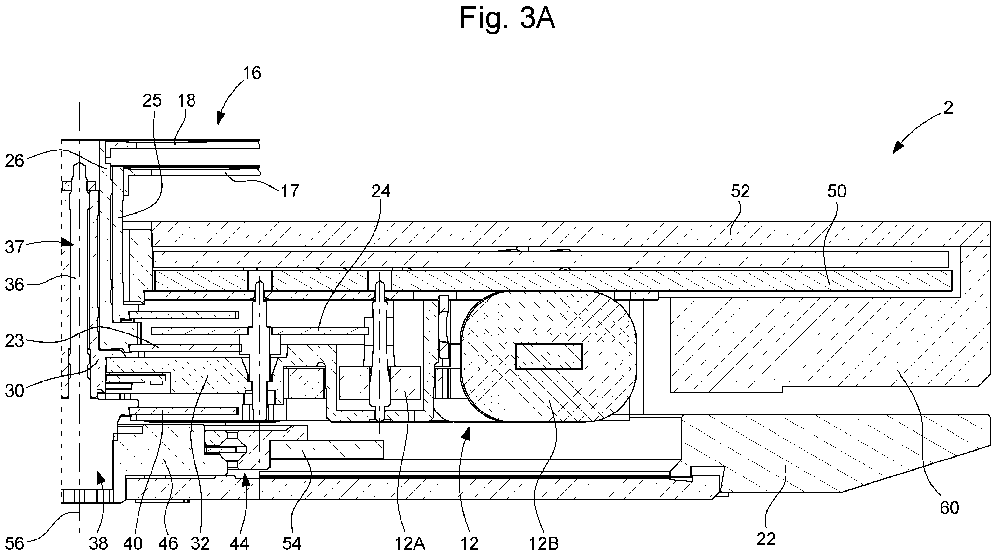

La coupe de la Figure 3A montre le moteur électromécanique 12, notamment un moteur pas-à-pas du type Lavet, qui comprend un rotor 12A muni d'un aimant permanent et une bobine 12B montée sur un circuit magnétique formant un stator présentant deux pôles magnétiques autour de l'aimant du rotor 12A. On voit également le rouage entre le rotor 12A et l'aiguille des minutes 18, ce rouage comprenant une roue centrale 23 fixée au canon allongé 26 portant l'aiguille des minutes, un mobile 24 dont la roue engrène avec un pignon du rotor et dont le pignon engrène avec la roue centrale 23, aussi nommée deuxième roue.

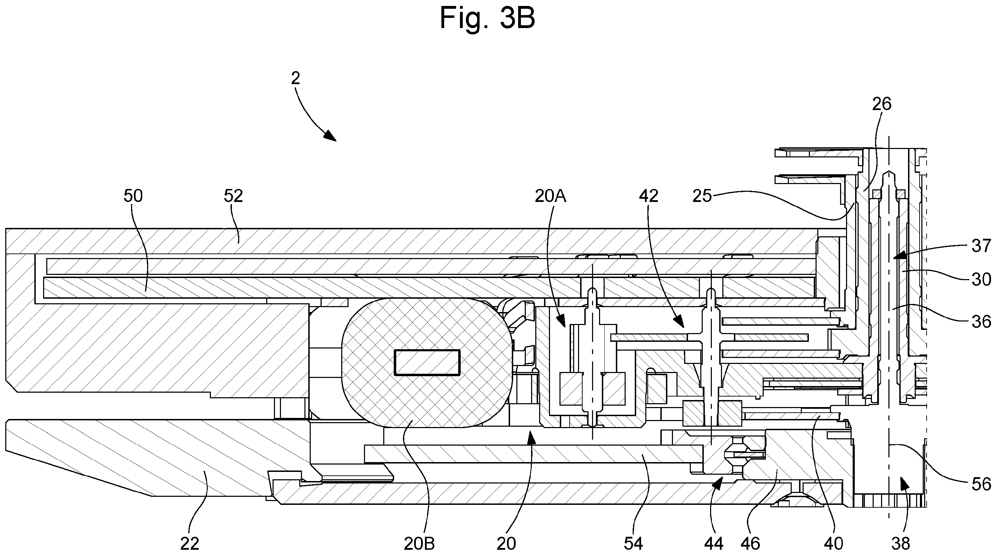

Comme le montre la coupe de la Figure 3B, le module électromécanique 4 comprend en outre une génératrice 20 formée d'un rotor 20A et d'une bobine 20B qui est montée classiquement sur un noyau ferromagnétique d'un stator définissant un circuit magnétique avec deux pôles magnétiques (épanouissements polaires) qui entourent l'aimant permanent bipolaire du rotor 20A. De préférence, le circuit magnétique, notamment ses deux épanouissements polaires, sont configurés de manière à engendrer un faible couple réluctant pour le rotor de la génératrice, en particulier en éliminant les encoches de positionnement souvent prévues dans les moteurs pas-à-pas. Pour que le mouvement électromécanique soit autonome au niveau de son approvisionnement en énergie électrique, en étant capable de produire de l'énergie électrique à partir d'accélérations à laquelle peut être soumise la montre équipée d'un tel mouvement horloger, notamment par des mouvements du bras d'un utilisateur, la génératrice 20 est associée à une masse oscillante 22 qui est coaxiale au dispositif d'affichage de l'heure.

La génératrice 20 est reliée cinématiquement à la masse oscillante 22 d'une manière qui permette de conserver un module électromécanique 4 relativement simple et d'avoir une moindre augmentation d'épaisseur du mouvement suite à l'ajout de la masse oscillante prévue coaxiale à l'affichage analogique de l'heure pour entraîner en rotation la génératrice. Pour ce faire, la génératrice est reliée cinématiquement à la masse oscillante via une roue 40, nommée aussi première roue, et un mobile intermédiaire 42 agencé entre cette roue 40 et le rotor 20A de la génératrice, la roue 40 étant munie d'un arbre 36 qui est coaxial aux deux canons 25 et 26 des deux aiguilles 17 et 18 et qui est guidé en rotation par un tube cylindrique fixe 30 dans lequel est situé un axe 37 formant partiellement l'arbre 36. Ainsi, l'arbre 36 de la première roue 40 n'est pas pivoté dans un palier du côté de l'affichage analogique. De plus, le tube cylindrique fixe 30 est, comme déjà indiqué, également utilisé pour guider en rotation les deux canons respectifs des aiguilles des minutes et des heures. On a donc une économie de moyens matériels grâce à l'agencement selon l'invention.

L'arbre 36 comprend une partie inférieure 38 qui prolonge l'axe 37 en direction de la partie centrale 46, mobile en rotation, d'un dispositif de roulement à billes 44 qui est monté sur un pont additionnel 54. Cette partie inférieure 38 présente un diamètre supérieur à celui de l'axe 37 et elle est fixée à la partie centrale 46, à laquelle est aussi fixée la masse oscillante 22. La première roue 40 est donc reliée fixement à la masse oscillante 22 du côté opposé au tube cylindrique 30, de sorte que cette masse oscillante est en relation d'engrènement avec le rotor 20A de la génératrice 20 et peut ainsi entraîner en rotation la génératrice via cette première roue. On remarquera que la première roue 40 est fixée à la masse oscillante 22 sans l'agencement d'un palier propre à cette première roue du côté de cette masse oscillante, de sorte que la première roue n'est associée à aucun propre palier de pivotement.

Dans une variante non représentée, le tube cylindrique fixe 30 est omis. Ainsi, le canon allongé 26, qui porte l'aiguille / l'indicateur 18, entoure directement l'axe 37 de l'arbre 36 de la première roue 40 et c'est ce canon qui guide alors en rotation, du côté de l'affichage, la première roue 40 qui est couplée cinématiquement à la génératrice 20.

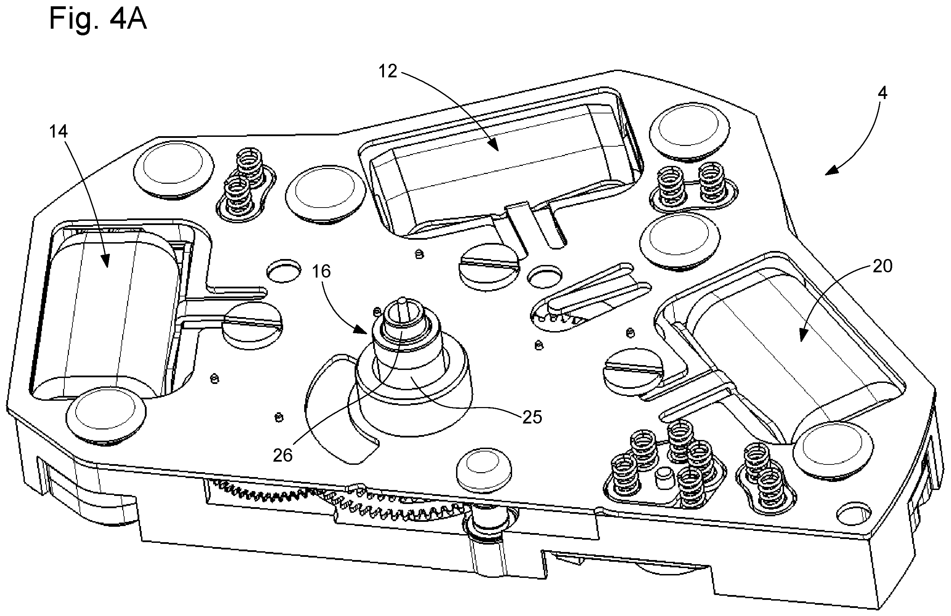

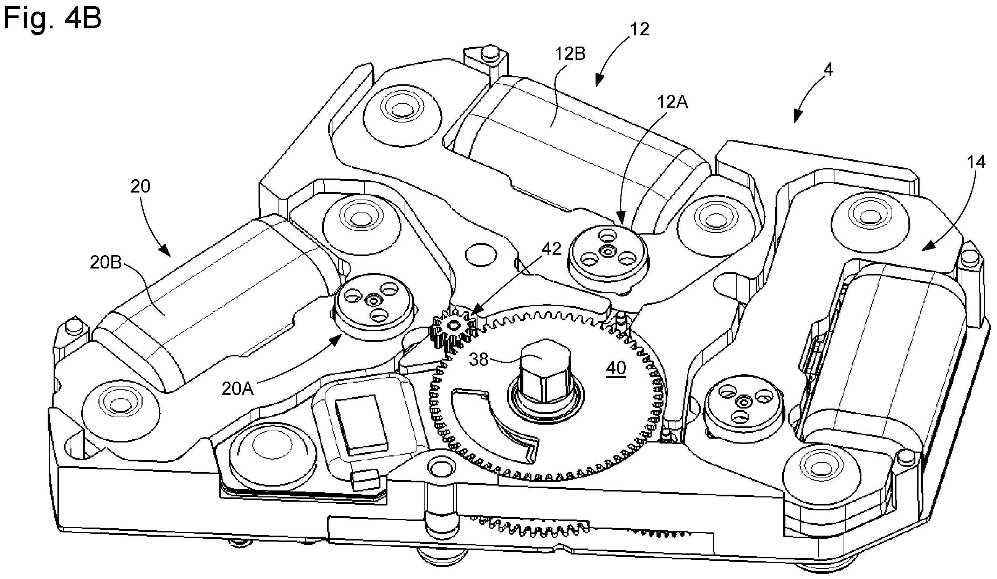

Le moteur électromécanique 12, la génératrice 20, un premier rouage comprenant au moins une première roue 40 et couplant cinématiquement la masse oscillante 22 au rotor de la génératrice, et un deuxième rouage comprenant au moins une deuxième roue 23 et couplant cinématiquement le moteur électromécanique à au moins un indicateur de l'affichage analogique, forment ensemble un module électromécanique distinct 4 qui est agencé dans le mouvement horloger 2 de manière amovible. Ce module 4 est montré en perspective aux Figures 4A et 4B, la Figure 4A étant une vue de dessus alors que la Figure 4B est une vue de dessous. On observe sur ces Figures et de la description précédente une caractéristique remarquable de l'invention, à savoir que la génératrice et le premier rouage qui la relie cinématiquement à la masse oscillante présentent un agencement correspondant sensiblement à celui d'un moteur électromécanique entraînant une aiguille des secondes dans un module moteur classique dans lequel cette aiguille des secondes, coaxiale aux aiguilles des minutes et des heures, est entraînée de manière indépendante à ces aiguilles des minutes et des heures et est, à cet effet, associée à un propre rouage, nommé ci-avant 'premier rouage'. En règle générale, comme un moteur pas-à-pas, notamment du type Lavet, effectue deux pas par tour, le facteur de transmission entre la roue des secondes et le rotor du moteur en question est égal à trente, de sorte que l'aiguille des secondes effectue successivement des sauts correspondant chacun à une seconde. Ainsi, dans une variante avantageuse de l'invention, le rapport de transmission entre la roue centrale 40 et le rotor 20A de la génératrice est prévu égal à trente pour pouvoir utiliser un module moteur en le modifiant au minimum. Toutefois, dans une variante générale, ce rapport de transmission est compris entre dix et cent.

Dans le cadre de l'invention, il est donc prévu l'utilisation d'un module moteur du type électromécanique comprenant au moins un premier moteur, formé d'un rotor à aimant permanent et d'un stator muni d'au moins une bobine et associé à une première roue munie d'un arbre, et un deuxième moteur associé à au moins une deuxième roue munie d'un canon destiné à porter un indicateur des minutes d'un affichage analogique de l'heure, ledit arbre étant guidé en rotation par un tube cylindrique fixe autour duquel est monté ledit canon ou par ce canon lui-même et destiné à porter dans ledit module moteur un indicateur des secondes ou compteur de secondes, pour former un module électromécanique selon l'invention qui comprend, d'une part, au moins un moteur électromécanique, dont le deuxième moteur, pour l'entraînement d'un indicateur des heures et dudit indicateur des minutes et, d'autre part, une génératrice formée par ledit rotor à aimant permanent et ledit stator muni de ladite au moins une bobine. Selon l'invention, l'arbre de la première roue est prolongé du côté opposé à l'affichage analogique de l'heure et relié fixement à une masse oscillante agencée sous ledit module électromécanique, de manière coaxiale à cette première roue, pour pouvoir entrainer en rotation le rotor de la génératrice.

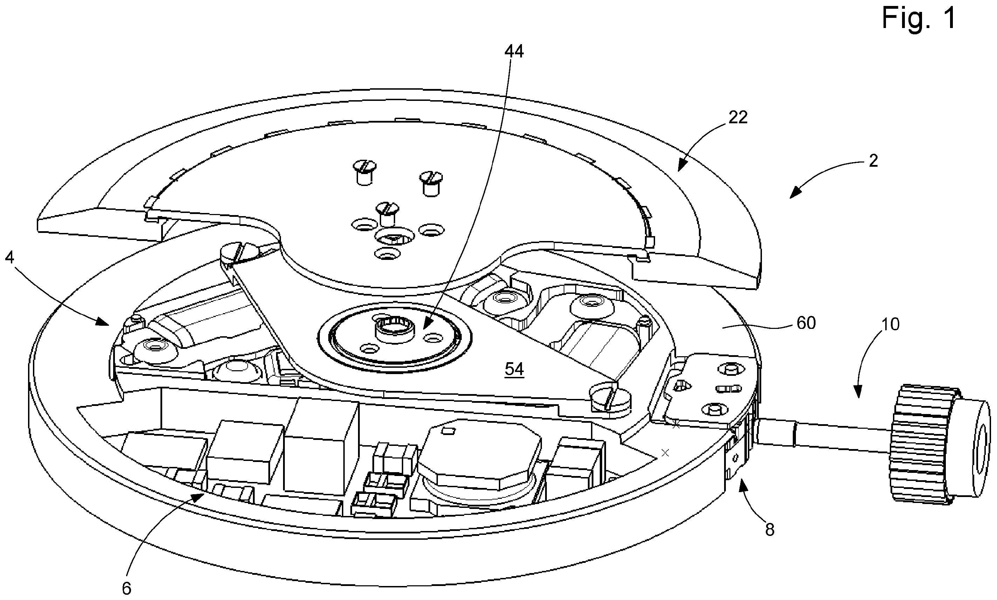

Dans une variante préférée, la masse oscillante 22 est fixée à une partie centrale 46, mobile en rotation, d'un dispositif de roulement à billes 44 qui est agencé sous le module électromécanique. A cet effet, il est prévu un pont additionnel 54 qui est fixé directement au module électromécanique 4 pour le compléter ou à un bâti 60, par exemple en matériau plastique, dans un logement duquel est situé le module électromécanique (voir Figure 1). Dans cette variante préférée, comme déjà décrit précédemment, l'arbre 36 de la première roue 40 n'est pas pivoté dans un palier inférieur dans le module électromécanique, cette première roue étant fixée à la masse oscillante 22 sans l'agencement d'un palier propre à cette première roue du côté de la masse oscillante, de sorte que la première roue n'est associée à aucun propre palier, ce qui permet de conserver une épaisseur / hauteur du mouvement horloger 2 relativement petite.

Dans une variante particulière, le module moteur initial utilisé pour réaliser le module électromécanique selon l'invention comprend des stators (circuits ferromagnétiques) présentant des encoches de positionnement autour du trou dans lequel est agencé l'aimant permanent du rotor pour que les moteurs correspondants soient du type pas-à-pas. Un de ces stators est remplacé par un stator sans encoches de positionnement qui est alors utilisé pour former la génératrice dans le module électromécanique, de sorte à diminuer un couple réluctant dans la génératrice.

On constate donc que la présente invention permet de partir d'un module moteur usuel pour un mouvement électromécanique et d'obtenir le module électromécanique selon l'invention moyennant relativement peu de modification. En effet, seul l'axe de la roue des secondes doit être remplacé par un arbre présentant une partie inférieure, du côté de la masse oscillante, configurée pour une fixation à cette masse oscillante ou être complété avec une telle partie inférieure qui soit adaptée à une fixation à la masse oscillante, laquelle est ajoutée pour entraîner la génératrice.

## Revendications

1. Mouvement horloger (2) du type électromécanique comprenant un dispositif d'affichage analogique de l'heure (16) avec un canon portant un indicateur (18), ce mouvement horloger étant muni d'au moins un moteur électromécanique (12) pour pouvoir entraîner au moins ledit indicateur, d'une génératrice (20) comprenant un rotor (20A) et d'une masse oscillante (22) coaxiale audit dispositif d'affichage de l'heure, ce mouvement horloger comprenant une première roue (40) munie d'un arbre (36) coaxial audit canon, ce canon étant solidaire d'une deuxième roue (23) en relation d'engrènement avec le moteur électromécanique, ledit arbre étant guidé en rotation par le canon ou par un tube cylindrique fixe (30) autour duquel est monté, mobile en rotation, ledit canon ; **caractérisé en ce que** la première roue (40) est en relation d'engrènement avec le rotor de la génératrice ; et **en ce que** la première roue est reliée fixement à la masse oscillante, du côté opposé à l'affichage analogique de l'heure, de sorte que cette masse oscillante peut entraîner en rotation le rotor de la génératrice via la première roue.

2. Mouvement horloger selon la revendication 1, **caractérisé en ce que** la masse oscillante (22) est fixée à une partie centrale (46), mobile en rotation, d'un dispositif de roulement à billes (44).

3. Mouvement horloger selon la revendication 1 ou 2, **caractérisé en ce que** la première roue (40) est fixée à la masse oscillante (22) sans l'agencement d'un palier propre à cette première roue du côté de cette masse oscillante, de sorte que la première roue n'est associée à aucun propre palier de pivotement.

4. Mouvement horloger selon une quelconque des revendications précédentes, **caractérisé en ce que** le moteur électromécanique (12), la génératrice (20), un premier rouage (40, 42) comprenant la première roue et couplant cinématiquement la masse oscillante (22) au rotor de la génératrice, et un deuxième rouage comprenant la deuxième roue et couplant cinématiquement le moteur électromécanique audit au moins un indicateur (18) forment ensemble un module électromécanique (4) qui est distinct des autres parties du mouvement horloger et agencé dans ce mouvement horloger de manière amovible.

5. Mouvement horloger selon une quelconque des revendications précédentes, **caractérisé en ce que** le rapport de transmission entre la première roue (40) et le rotor (20A) de la génératrice (20) est égal à trente.

6. Utilisation d'un module moteur du type électromécanique comprenant au moins un premier moteur, formé d'un rotor à aimant permanent (20A) et d'un stator muni d'au moins une bobine (20B) et associé à une première roue (40) munie d'un axe, et un deuxième moteur (12) associé à au moins une deuxième roue (23) munie d'un canon (26) destiné à porter un indicateur des minutes (18) d'un affichage analogique de l'heure (16), ledit axe étant guidé en rotation par un tube cylindrique fixe (30), autour duquel est monté ledit canon, ou directement par ce canon et destiné à porter dans ledit module moteur un indicateur des secondes ou compteur de secondes, pour former un module électromécanique (4) comprenant, d'une part, au moins un moteur électromécanique (12, 14), formé dudit deuxième moteur, pour l'entraînement d'un indicateur des heures (17) et dudit indicateur des minutes (18) et, d'autre part, une génératrice (20) formée par ledit rotor à aimant permanent et ledit stator muni de ladite au moins une bobine, la première roue (40) étant destinée à être reliée fixement à une masse oscillante (22) qui peut être agencée sous ledit module électromécanique, de manière coaxiale à cette première roue, pour pouvoir entrainer en rotation le rotor de la génératrice.

7. Utilisation d'un module moteur selon la revendication 6, dans lequel la masse oscillante (22) est fixée à une partie centrale (46), mobile en rotation, d'un dispositif de roulement à billes (44) qui est agencé sous le module électromécanique (4).

8. Utilisation d'un module moteur selon la revendication 7, dans lequel l'axe de la première roue (40) est remplacé par un arbre (36) configuré de manière à permettre sa fixation à la masse oscillante, cette première roue étant fixée à la masse oscillante associée audit module électromécanique sans l'agencement d'un palier propre à cette première roue du côté de cette masse oscillante, de sorte que la première roue n'est associée à aucun propre palier.

9. Utilisation d'un module moteur selon une quelconque des revendications 6 à 8, dans lequel ledit stator présente des encoches de positionnement, ce stator étant remplacé par un stator sans encoches de positionnement dans ledit module électromécanique (4) de sorte à diminuer un couple réluctant dans la génératrice.

## Patentansprüche

1. Uhrwerk (2) elektromechanischer Art, umfassend eine analoge Zeitanzeigevorrichtung (16) mit einem Rohr, das einen Zeiger (18) trägt, wobei dieses Uhrwerk mit mindestens einem elektromechanischen Motor (12) bereitgestellt ist, um mindestens den Zeiger (18) anzutreiben, mit einem Generator (20), der einen Rotor (20A) umfasst, und mit einer Schwungmasse (22), die koaxial zu der Zeitanzeigevorrichtung ist, wobei dieses Uhrwerk ein erstes Rad (40) umfasst, das mit einer Welle (36) versehen ist, die koaxial zu dem Rohr ist, wobei dieses Rohr an einem zweiten Rad (23) befestigt ist, das mit dem elektromechanischen Motor in Eingriff steht, wobei die Welle durch das Rohr oder durch ein festes zylindrisches Rohr (30), um das das Rohr drehbar angebracht ist, drehbar geführt wird; **dadurch gekennzeichnet, dass** das erste Rad (40) mit dem Rotor des Generators in Eingriff steht; und dass das erste Rad an der Seite, die der analogen Zeitanzeige gegenüberliegt, dauerhaft an der Schwungmasse befestigt ist, sodass diese Schwungmasse den Rotor des Generators über das erste Rad drehen kann.

2. Uhrwerk nach Anspruch 1, **dadurch gekennzeichnet, dass** die Schwungmasse (22) an einem zentralen Teil (46) einer Kugellagervorrichtung (44) befestigt ist, der gedreht werden kann.

3. Uhrwerk nach Anspruch 1 oder 2, **dadurch gekennzeichnet, dass** das erste Rad (40) an der Schwungmasse (22) befestigt ist, ohne dass ein für dieses erste Rad spezifisches Lager an der Seite dieser Schwungmasse angebracht ist, sodass das erste Rad keinem spezifischen Drehlager zugeordnet ist.

4. Uhrwerk nach einem der vorhergehenden Ansprüche, **dadurch gekennzeichnet, dass** der elektromechanische Motor (12), der Generator (20), ein erster Getriebezug (40, 42), umfassend das erste Rad und kinematisch die Schwungmasse (22) mit dem Rotor des Generators koppelt, und einen zweiten Getriebezug, umfassend das zweite Rad und kinematisch den elektromechanischen Motor mit dem mindestens einen Zeiger (18) koppelt, zusammen ein elektromechanisches Modul (4) bilden, das von den anderen Teilen des Uhrwerks getrennt und in diesem Uhrwerk lösbar angeordnet ist.

5. Uhrwerk nach einem der vorhergehenden Ansprüche, **dadurch gekennzeichnet, dass** das Übersetzungsverhältnis zwischen dem ersten Rad (40) und dem Rotor (20A) des Generators (20) gleich dreißig ist.

6. Verwenden eines elektromechanischen Motormoduls, umfassend mindestens einen ersten Motor, gebildet aus einem Permanentmagnet-Rotor (20A) und einem Stator, der mit mindestens einer Spule (20B) versehen und einem ersten Rad (40) zugeordnet ist, das mit einer Achse versehen ist, und einem zweiten Motor (12), der mindestens einem zweiten Rad (23) zugeordnet ist, das mit einem Rohr (26) versehen ist, das zum Tragen eines Minutenzeigers (18) einer analogen Zeitanzeige (16) vorgesehen ist, wobei die Achse durch ein festes zylindrisches Rohr (30), um das das Rohr angebracht ist, drehbar geführt wird oder direkt durch dieses Rohr geführt wird und zum Tragen eines Sekundenzeiges oder eines Sekundenzählers in dem Motormodul vorgesehen ist, sodass ein elektromechanisches Modul (4) gebildet wird, umfassend einerseits mindestens einen elektromechanischen Motor (12, 14), gebildet aus dem zweiten Motor, zum Antreiben einer Stundenanzeige (17) und der Minutenanzeige (18) und andererseits einen Generator (20), gebildet aus dem Permanentmagnet-Rotor und dem Stator, der mit der mindestens einen Spule versehen ist, wobei das erste Rad (40) dauerhaft an einer Schwungmasse (22) befestigt ist, die unterhalb des elektromechanischen Moduls koaxial zu diesem ersten Rad angeordnet werden kann, um den Rotor des Generators zu drehen.

7. Verwenden eines Motormoduls nach Anspruch 6, in dem die Schwungmasse (22) an einem zentralen Teil (46), der gedreht werden kann, einer Kugellagervorrichtung (44) befestigt ist, die unter dem elektromechanischen Modul (4) angeordnet ist.

8. Verwenden eines Motormoduls nach Anspruch 7, in dem die Achse des ersten Rads (40) durch eine Welle (36) ersetzt wird, die so konfiguriert ist, dass sie an der Schwungmasse befestigt werden kann, wobei dieses erste Rad an der Schwungmasse befestigt ist, die dem elektromechanischen Modul zugeordnet ist, ohne dass ein für dieses erste Rad spezifisches Lager an der Seite dieser Schwungmasse angebracht ist, sodass das erste Rad keinem spezifischen Lager zugeordnet ist.

9. Verwenden eines Motormoduls nach einem der Ansprüche 6 bis 8, wobei der Stator Positionierungskerben aufweist, wobei dieser Stator durch einen Stator ohne Positionierungskerben in dem elektromechanischen Modul (4) ersetzt wird, um das Reluktanzdrehmoment in dem Generator zu reduzieren.

## Claims

1. A horology movement (2) of the electromechanical type comprising an analogue time display device (16) with a pipe carrying an indicator (18), this horology movement being provided with at least one electromechanical motor (12), so as to be able to drive at least said indicator (18), with a generator (20) comprising a rotor (20A) and with an oscillating weight (22) coaxial to the time display device, this horology movement comprising a first wheel (40) provided with an arbor (36) coaxial to said pipe, this pipe being attached to a second wheel (23) that meshes with the electromechanical motor, said arbor being rotationally guided by the pipe or by a fixed cylindrical tube (30 ) around which said pipe is rotationally mounted; **characterised in that** the first wheel (40) meshes with the rotor of the generator; and **in that** the first wheel is permanently attached to the oscillating weight, on the side opposite the analogue time display, so that this oscillating weight can rotate the rotor of the generator via the first wheel.

2. The horology movement according to claim 1, **characterised in that** the oscillating weight (22) is fastened to a central part (46), which can be rotated, of a ball bearing device (44).

3. The horology movement according to claim 1 or 2, **characterised in that** the first wheel (40) is fastened to the oscillating weight (22) without fitting a bearing specific to this first wheel on the side of this oscillating weight, so that the first wheel is not associated with any specific pivot bearing.

4. The horology movement according to any of the preceding claims, **characterised in that** the electromechanical motor (12), the generator (20), a first gear train (40, 42) comprising the first wheel and kinematically coupling the oscillating weight (22) to the rotor of the generator, and a second gear train comprising the second wheel and kinematically coupling the electromechanical motor to said at least one indicator (18) together form an electromechanical module (4) which is separate from the other parts of the horology movement and detachably arranged in this horology movement.

5. The horology movement according to any of the preceding claims, **characterised in that** the transmission ratio between the first wheel (40) and the rotor (20A) of the generator (20) is equal to thirty.

6. Use of a motor module of the electromechanical type comprising at least a first motor, formed of a permanent magnet rotor (20A) and of a stator provided with at least one coil (20B) and associated with a first wheel (40) provided with an axis, and a second motor (12) associated with at least a second wheel (23) provided with a pipe (26) intended to carry a minute indicator (18) of an analogue time display (16), said axis being rotationally guided by a fixed cylindrical tube (30), around which said pipe is mounted, or directly guided by this pipe and intended to carry a seconds indicator or seconds counter in said motor module, so as to form an electromechanical module (4) comprising, on one hand, at least one electromechanical motor (12, 14), formed of said second motor, for driving an hour indicator (17) and said minute indicator (18) and, on the other hand, a generator (20) formed by said permanent magnet rotor and said stator provided with said at least one coil, the first wheel (40) being permanently attached to an oscillating weight (22) which can be arranged under said electromechanical module, coaxial to this first wheel, so as to be able to rotate the rotor of the generator.

7. The use of a motor module according to claim 6, in which the oscillating weight (22) is fastened to a central part (46), which can be rotated, of a ball bearing device (44) which is arranged under the electromechanical module (4).

8. The use of a motor module according to claim 7, in which the axis of the first wheel (40) is replaced by an arbor (36) configured so as to enable it to be fastened to the oscillating weight, this first wheel being fastened to the oscillating weight associated with said electromechanical module without fitting a bearing specific to this first wheel on the side of this oscillating weight, so that the first wheel is not associated with any specific bearing.

9. The use of a motor module according to any of claims 6 to 8, in which said stator has positioning notches, this stator being replaced by a stator with no positioning notches in said electromechanical module (4) so as to reduce reluctance torque in the generator.
